# EUROPEAN PATENT SPECIFICATION

(11) **EP 0 269 001 B1**
(45) Date of publication and mention of the grant of the patent: **23.02.1994**
(21) Application number: 87117087.4
(22) Date of filing: 19.11.1987
(51) Int. Cl.: H04B 10/00, H04J 14/00

(54) **Method of enlarging the transmission capacity of an optical subscriber network transmission system**
Verfahren zur Erweiterung der Uebertragungskapazität in einem Netzwerkübertragungssystem für optische Teilnehmer
Procédé pour augmenter la capacité de transmission dans un système de transmission en réseau pour abonnés optiques

(30) Priority: 21.11.1986 JP 276557/86
(43) Date of publication of application: 01.06.1988
(73) Proprietor: HITACHI, LTD., Chiyoda-ku, Tokyo 101 (JP)
(72) Inventor: Takasaki, Yoshitaka, Tokorozawa-shi Saitama-ken (JP)
(74) Representative: Strehl Schübel-Hopf Groening & Partner

(56) References cited:
- NTC 1980, CONFERENCE RECORD OF THE NATIONAL TELECOMMUNICATIONS CONFERENCE, Houston, 30th November - 4th December 1980, vol. 3, pages 46.2.1-46.2.6, IEEE, New York, US; C. ROWE et al.: "FD-2 fiber optics system for interoffice trunking"
- PATENT ABSTRACTS OF JAPAN, vol. 8, no. 285 (E-287)[1722], 26th December 1984 & JP-A-59 151 543

## Description

The present invention relates to an optical subscriber network transmission system, and more particularly to a network transmission system which is well suited to smoothly enlarge a transmission capacity in the case where information of large capacity is offered to subscribers by the use of single-mode optical fibers.

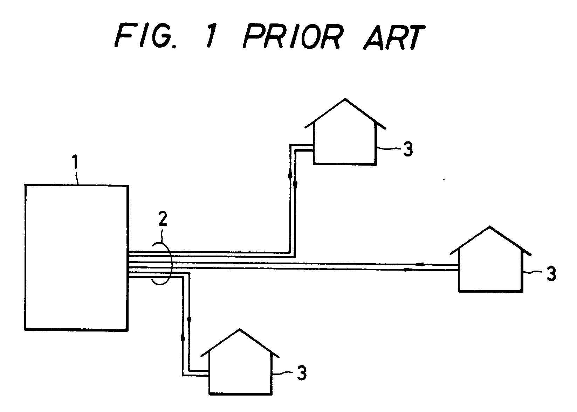

An example of a network which offers various services with optical fibers, is shown in Fig. 1. Service information items are transmitted from a center 1 to individual subscribers 3 through optical fibers 2. As the contents of the services, there are mentioned conventional audio-telephone, and besides, facsimile, pay TV, high-definition TV, etc. A system of this type is described in, for example, "Integrated Circuit for Broad-Band Communications Systems" by H. Reiner, IEEE JOURNAL ON SELECTED AREA IN COMMUNICATIONS, VOL. SAC-4, NO. 4, JULY 1986, pp. 480-487.

The services can be classified into symmetric and asymmetric types. That is, the services such as telephone and facsimile in which the information rates of a transmission line from the center to each subscriber (downstream transmission line) and a transmission line from the subscriber to the center (upstream transmission line) are equal to each other are called the symmetric type, while the services such as pay TV and high-definition TV in which the capacity of the downstream transmission line is larger are called the asymmetric type.

In general, in an optical subscriber system, the symmetric and asymmetric services are multiplexed and then transmitted by the upstream and downstream transmission lines. Therefore, the transmission capacity of the downstream transmission line becomes larger than that of the upstream transmission line.

In addition, single-mode fibers of very broad band are employed for the transmission of signals between the center and the subscriber. Therefore, even when the subscriber wishes the offer of services having a still larger capacity of information in the future, only a transmitter and a receiver may be replaced with ones for the transmission of the larger capacity of information while the laid fibers are used as they are.

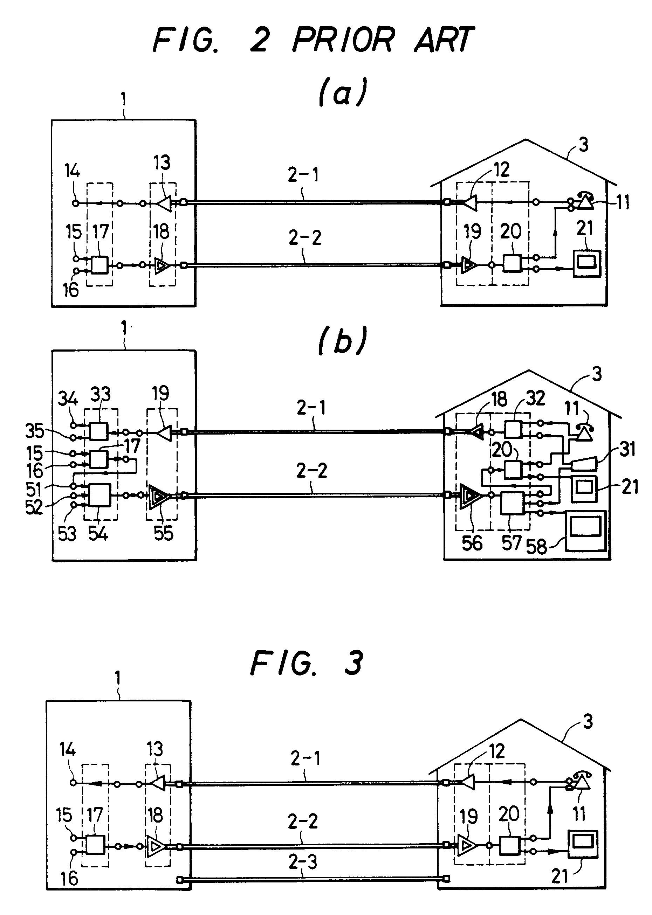

In this case, a measure in which a transmitter and a receiver having been used for the downstream transmission line are diverted to the upstream transmission line and in which a transmitter and a receiver of larger capacity are installed anew for the downstream transmission line, is more economic owing to the effective utilization of the existing facilities than a measure in which transmitters and receivers are installed anew for both the upstream and downstream transmission lines. This will be elucidated with reference to Figs. 2(a) and 2(b).

Fig. 2(a) shows the connection sides between the center 1 and the subscriber 3 in the case where telephone and pay TV are subscribed to. Via the optical fiber 2-1 of the upstream transmission line, a voice signal from a telephone set 11 is transmitted to the center 1 by a transmitter 12 and is received by a receiver 13.

On the other hand, as regards the downstream transmission line, a voice signal is applied to a terminal 15, while a pay TV signal is applied to a terminal 16, and the signals are multiplexed by a multiplexer 17. The multiplexed signal is transmitted by a transmitter 18 and received by a receiver 19 via the optical fiber 2-2 of the downstream transmission line. The received signal is demultiplexed by a demultiplexer 20 into the voice signal and the pay TV signal, which are respectively applied to the telephone set 11 and a TV receiving set 21.

A case where facsimile and high-definition TV are further added to this system, is shown in Fig. 2(b). In this case, the voice signal from the telephone set 11 and also a facsimile signal from a facsimile set 31 are multiplexed on the upstream transmission line by a multiplexer 32, whereupon the multiplexed signal is transmitted to the center side. On the center side, this signal is demultiplexed into the voice signal and the facsimile signal by a demultiplexer 33.

As regards the downstream transmission line, the multiplexed signal of the voice and pay TV signals as applied to the terminal 51 of a multiplexer 54, a facsimile signal applied to the terminal 52 thereof and a high-definition TV signal applied to the terminal 53 thereof are multiplexed and then transmitted. The multiplexed signal is demultiplexed by a demultiplexer 57 on the reception side, and the demultiplexed signals are applied to the respective receiving sets.

In changing-over the system of Fig. 2(a) to that of Fig. 2(b), it is economical that the transmitter and receiver 18, 19 for the downstream transmission line of the system in Fig. 2(a) are diverted for the upstream transmission line of the system in Fig. 2(b). On account of a change-over work, however, the operation of the system needs to be stopped for a considerably long term. More specifically, in the system of Fig. 2(a), the transmitter 18 and the receiver 19 are detached and are respectively substituted for the transmitter 12 and the receiver 13, whereupon the transmission line is tested. Next, the multiplexers 32 and 33 are added to the transmission line as illustrated in Fig. 2(b), and the overall test of the upstream transmission line is conducted. In addition, a transmitter 55 and a received 56 are added anew to the optical fiber 2-2 of the downstream transmission line, and a transmission test is conducted. Thereafter, the multiplexer 54 and the demultiplexer 57 are added, and the overall test of the downstream transmission line is conducted. Lastly, the overall test of the upstream and downstream transmission lines is conducted. When the tests in such a procedure are collectively executed for several subscribers or ten odd subscribers, it is sometimes the case that the interruption of the services for a week or so is necessitated.

The first part of claim 1 is based on the system described above with reference to Figures 2(a) and 2(b).

An object of the present invention is to shorten to the utmost the term of the service interruption in the change-over of the transmission line capacities as stated above.

This problem is solved by the invention as defined in claim 1.

As described in more detail below, an auxiliary fiber is prepared. For this reason, three optical fibers are required for each subscriber though two optical fibers have hitherto been sufficient. In recent years, however, the cost of the optical fibers has been rapidly lowering. Since the optical fibers are collectively laid as a cable, the increase of cost attributed to the increased number of the optical fibers is as slight as almost negligible when compared with the cost of the cable and the expense of a work for laying the cable. To the contrary, a cost reduction effect is much more important, the effect being based on such a merit that the term of a change-over work is shortened by the use of the auxiliary fiber.

Thus, a part of a new transmission line is constructed using the auxiliary fiber, and the test of the new transmission line is completed without interrupting any service. Thereafter, the service of an existing transmission line is switched to the new transmission line. Subsequently, the fiber of the existing transmission line, which is now unnecessary for this transmission line, is used as an auxiliary fiber, and successive change-over operations are performed. In this way, the interruption of services can be suppressed to the minimum.

### Brief Description of the Drawings:

Fig. 1 is a diagram showing an example of a prior art arrangement of an optical subscriber network to which the present invention is applied;
Figs. 2(a) and 2(b) are diagrams respectively showing examples of known transmission line arrangements before and after the enlargement of a service capacity in a case where a specified subscriber is taken out from Fig. 1; and
Fig. 3, Figs. 4(a) - 4(c) and Figs. 5(a) - 5(c) are diagrams each showing an embodiment of the present invention.

Below, preferred embodiments of the invention will be described.

The foregoing principle will be described with reference to Fig. 3. First, using an auxiliary fiber 2-3, a transmission line (a second downstream transmission line) which is larger in capacity than a downstream transmission line including an optical fiber 2-2 is constructed. Needless to say, the test of the second line does not require the interruption of any service. Since the second downstream transmission line can transmit also the information of the first downstream transmission line, a service can be continued by switching it to the second line immediately at the end of the test. Subsequently, the optical fiber 2-2 of the first downstream transmission line, which is now unnecessary for this transmission line, can be used as an auxiliary fiber to construct a second upstream transmission line. In this case, when the second upstream transmission line is constructed by substituting a transmitter 18 and a receiver 19 for a transmitter 12 and a receiver 13, respectively, an economical effect owing to the effective utilization of the existing facilities is attained. After the test of the second upstream transmission line comprehensive of a demultiplexer is ended, the service of the first upstream transmission line can be borne by a part of the second upstream transmission line.

Thus, increases in the capacities of the transmission lines can be achieved without the interruption of any service or with a service interruption of very short time. An optical fiber 2-1 for the first upstream transmission line, which is now unnecessary, can be used as an auxiliary fiber for a further service enlargement in the future.

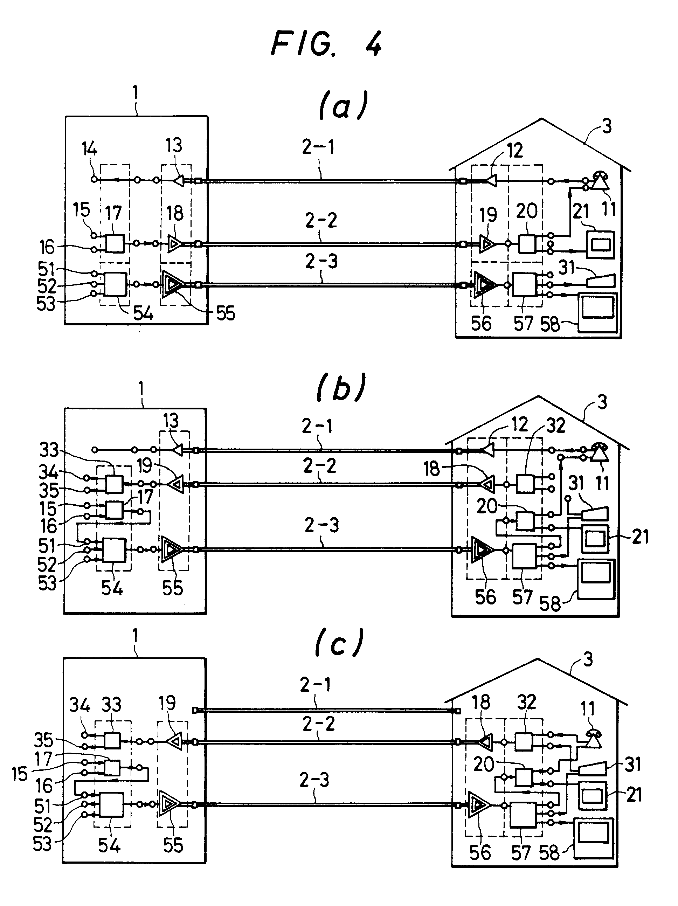

Now, an embodiment of the present invention will be described with reference to Figs. 4(a) - 4(c).

Fig. 4(a) shows an example in which a second downstream transmission line is constructed using an auxiliary fiber 2-3. A multiplexer 54 on a transmission side has three input terminals. When the output of a multiplexer 17 is connected to the terminal 51, the services of a first downstream transmission line can be included in and transmitted by the second downstream transmission line. In this example, the terminal 52 is for a facsimile signal, and the terminal 53 is for a high-definition TV signal. The output signal of the multiplexer 54 is applied to a transmitter 55. This transmitter can transmit signals of larger capacity than a transmitter 18. The multiplexed signal is received by a receiver 56, the capacity of which is of course designed to be larger than that of a receiver 19. The received signal is demultiplexed by a demultiplexer 57, and the resulting signals are respectively applied to a facsimile set 31 and a high-definition TV receiving set. The second downstream transmission line can be tested without interrupting the services of a first upstream transmission line and the first downstream transmission line. The test can be conducted in such a way that a circuit equivalent to a demultiplexer 20 is connected to the first output terminal of the demultiplexer 57 in dummy fashion.

A state in Fig. 4(b) is such that, in the example of Fig. 4(a), the output terminal of the multiplexer 17 is connected to the input terminal 51 of the multiplexer 54, while the input terminal of the demultiplexer 20 is connected to the first output terminal of the demultiplexer 57. Through the simple change-over, the services can be continued as they are.

Meanwhile, the first downstream transmission line having been connected by an optical fiber 2-2 has the transmitter 18 attached to the subscriber side and the receiver 19 attached to the center side in a manner to be replaced with each other, and it is separately prepared as a second upstream transmission line. A multiplexer 32 for multiplexing voice and facsimile signals is added to the subscriber side, while a demultiplexer 33 for demultiplexing both the signals is added to the center side, and these components are tested independently of the actual transmission lines.

Fig. 4(c) shows a state in which, in Fig. 4(b), the output terminals of a telephone set 11 and the facsimile set 31 on the subscriber side are connected to the input terminals of the multiplexer 32, while the output side of the demultiplexer 33 of the center is connected to an exchange etc. separately installed within the center. Such change-over can be effected without almost any interruption of the services. Thus, the work of changing-over the upstream transmission line from the first transmission line to the second transmission line of larger capacity is completed.

Incidentally, an optical fiber 2-1 which is now unnecessary can be used as an auxiliary fiber for a further system enlargement at the next time.

It will be understood that, when the spares of the transmitter 18 and the receiver 19 can be used, the change-over can be executed at a time by the use of two auxiliary fibers.

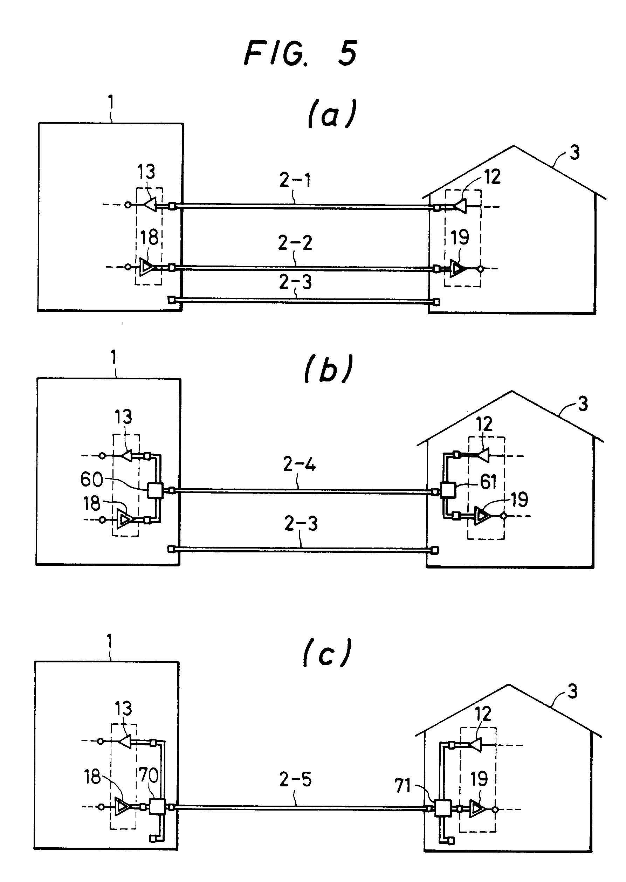

Moreover, the number of fibers to be used can be reduced using wavelength division multiplexers. This will be described with reference to Figs. 5(a) - 5(c). Fig. 5(a) shows the already-explained example which uses the three fibers. In case of employing two-wavelength division multiplexers 60 and 61 as shown in Fig. 5(b), the same effect can be produced with only two fibers.

It will also be understood from Fig. 5(c) that a single fiber suffices when three-wavelength division multiplexers 70 and 71 are employed.

Whether the scheme of Fig. 5(b) or that of Fig. 5(c) is adopted, depends upon the prices of the wavelength division multiplexers. In a case where the difference of the prices of the two-wavelength division multiplexers and the three-wavelength ones is less than the price of one optical fiber, the adoption of the scheme of Fig. 5(c) is more advantageous.

Besides, in a case where, even when any optical transmission line is not prepared beforehand, optical wavelength division multiplexers can be inserted so simply that the period of time of service interruption is negligible, the same effect as in the foregoing can be attained by constructing an auxiliary optical transmission line.

As described above, the present invention is very greatly effective in that a change-over work for enlarging the capacity of a subscriber, which has hitherto been supposed to be attended with a service interruption of several weeks in some cases, can be realized with an almost negligible interruption.

## Claims

1. A method of enlarging the transmission capacity of an optical subscriber network transmission system, which system comprises
a communication centre (1) including a first transmitter (18) for sending downstream information and a first receiver (13) for receiving upstream information,
a subscriber (3) including a second receiver (19) for receiving downstream information and a second transmitter (12) for sending upstream information,
a first optical transmission line (2-1) connecting said second transmitter (12) to said first receiver (13), and
a second optical transmission line (2-2) connecting said first transmitter (18) to said second receiver (19),
wherein said transmitters (12, 18) and receivers (13, 19) are connected to basic signal generating/ receiving devices (11, 17, 20, 21),
including installing additional signal generating/receiving devices (31, 54, 57, 58) in said centre (1) and said subscriber (3),
characterised by the steps of
A. installing a third transmitter (55) in said centre (1) and a third receiver (56) in said subscriber (3),
B. connecting the third transmitter (55) and third receiver (56) to an auxiliary optical transmission line (2-3) provided between said centre (1) and said subscriber (3),
C. connecting said additional signal generating/receiving devices (31, 54, 57, 58) to said third transmitter (55) and third receiver (56), and
D. disconnecting said basic signal generating/receiving devices (11, 17, 20, 21) from said first transmitter (18) and second receiver (19) and connecting them to said third transmitter (55) and third receiver (56).

2. The method of claim 1, wherein a single optical fibre (2-4) is used to form said first and second optical transmission lines, and optical wavelength division multiplexers (60, 61) are connected to both ends of said optical fibre (2-4).

3. The method of claim 1, wherein a single optical fibre (2-5) is used to form said first, second and auxiliary optical transmission lines, and optical wavelength division multiplexers (70, 71) are connected to both ends of said optical fibre (2-5).

## Patentansprüche

1. Verfahren zum Erweitern der Übertragungskapazität eines optischen Teilnehmernetzwerk-Übertragungssystems, das umfaßt:
eine Verbindungszentrale (1) mit einem ersten Sender (18) zum Senden von Abwärts-Informationen und einem ersten Empfänger (13) zum Empfang von Aufwärts-Informationen,
einen Teilnehmer (3) mit einem zweiten Empfänger (19) zum Empfang von Abwärts-Informationen und einem zweiten Senden (12) zum Senden von Aufwärts-Informationen,
eine den zweiten Sender (12) mit dem ersten Empfänger (13) verbindende erste optische Übertragungsleitung (2-1), und
eine den ersten Sender (18) mit dem zweiten Empfänger (19) verbindende zweite optische Übertragungsleitung (2-2),
wobei die Sender (12, 18) und Empfänger (13, 19) an Signalerzeugungs/empfangs-Grundgeräte (11, 17, 20, 21) angeschlossen sind,
wobei in der Zentrale (1) und dem Teilnehmer (3) weitere Signalerzeugungs/empfangsgeräte (31, 54, 57, 58) installiert werden,
gekennzeichnet durch folgende Schritte:
A. Installieren eines dritten Senders (55) in der Zentrale (1) und eines dritten Empfängers (56) in dem Teilnehmer (3),
B. Anschließen des dritten Senders (55) und des dritten Empfängers (56) an eine zwischen der Zentrale (1) und dem Empfänger (3) vorhandene optische Hilfs-Übertragungsleitung (2-3),
C. Anschließen der zusätzlichen Signalerzeugungs/empfangsgeräte (31, 54, 57,58) an den dritten Sender (55) und den dritten Empfänger (56), und
D. Trennen der Signalerzeugungs/empfangs-Grundgeräte (11, 17, 20, 21) von dem ersten Sender (18) und dem zweiten Empfänger (19) und Anschließen dieser Geräte an den dritten Sender (55) und den dritten Empfänger (56).

2. Verfahren nach Anspruch 1, wobei eine einzelne optische Faser (2-4) zur Bildung der ersten und der zweiten optischen Übertragungsleitung verwendet wird und an beide Enden dieser optischen Faser (2-4) optische Multiplexer (60, 61) mit Wellenlängenunterteilung angeschlossen werden.

3. Verfahren nach Anspruch 1, wobei eine einzelne optische Faser (2-5) zur Bildung der optischen ersten, der zweiten, und der Hilfs-Übertragungsleitung verwendet wird und an beide Enden dieser optischen Faser (2-5) optische Multiplexer (70, 71) mit Wellenlängenunterteilung angeschlossen werden.

## Revendications

1. Procédé pour accroître la capacité de transmission d'un système de transmission d'un réseau d'abonnés optiques, lequel système comprend
un centre de communication (1) comprenant un premier émetteur (18) pour émettre une information aval et un premier récepteur (13) pour recevoir une information amont,
un abonné (3) comprenant un second récepteur (19) servant à recevoir une information aval et un second émetteur (12) pour émettre une information amont,
une première ligne de transmission optique (2-1) reliant ledit second émetteur (12) audit premier récepteur (13), et
une seconde ligne de transmission optique (2-2 ) raccordant ledit premier émetteur (18) audit second récepteur (19), lesdits émetteurs (12,18) et lesdits récepteurs (13,19) étant raccordés à des dispositifs de production/réception de signaux de base (11,17,20,21),
y compris l'installation de dispositifs additionnels de production/réception de signaux (31,54,57,58) dans ledit centre (1) et chez ledit abonné (3),
caractérisé par les étapes consistant à
A. installer un troisième émetteur (55) dans ledit centre (1) et un troisième récepteur (56) chez ledit abonné (3),
B. raccorder le troisième émetteur (55) et le troisième récepteur (56) à une ligne auxiliaire de transmission optique (2-3) prévue entre ledit centre (1) et ledit abonné (3),
C. raccorder lesdits dispositifs additionnels de production/réception de signaux (31,54,57,58) audit troisième émetteur (55) et audit troisième récepteur (56), et
D. déconnecter lesdits dispositifs de production et réception de signaux de base (11,17,20,21) dudit premier émetteur (18) et dudit second récepteur (19) et les raccorder audit troisième émetteur (55) et audit troisième récepteur (56).

2. Procédé selon la revendication 1, dans lequel une fibre optique unique (2-4) est utilisée pour former lesdites première et seconde lignes de transmission optique, et des multiplexeurs de division des longueurs d'onde optiques (60,61) sont raccordés aux deux extrémités de ladite fibre optique (2-4).

3. Procédé selon la revendication 1, selon lequel une seule fibre optique (2-5) est utilisée pour former lesdites première et seconde lignes de transmission optique et une ligne de transmission optique auxiliaire, et des multiplexeurs de division des longueurs d'onde optiques (70, 71) sont raccordés aux deux extrémités de ladite fibre optique (2-5).
